# EUROPEAN PATENT SPECIFICATION

(11) **EP 1 917 860 B1**
(45) Date of publication and mention of the grant of the patent: **12.09.2012**
(21) Application number: 07117878.4
(22) Date of filing: 04.10.2007
(51) Int. Cl.: A23C 11/10

(54) **Complete whole soya natural drink, for human consumption, and method for the production thereof.**
Komplett aus Soja bestehendes natürliches Getränk für den menschlichen Verzehr und Herstellungsverfahren dafür
Boisson naturelle au soja entier et complet destiné à la consommation humaine et son procédé de fabrication

(30) Priority: 16.10.2006 IT MI20061979
(43) Date of publication of application: 07.05.2008
(73) Proprietor: Bartocci, Ezio, 29100 Piacenza (IT)
(72) Inventor: Bartocci, Ezio, 29100 Piacenza (IT)
(74) Representative: Crugnola, Pietro

(56) References cited:
- EP-A- 0 287 081
- WO-A-2005/020714
- GB-A- 1 314 870
- JP-A- 58 126 748
- US-A- 4 064 277
- US-A1- 2003 124 223
- US-B1- 6 582 739

## Description

The object of the present invention is a complete whole soya natural drink, for human consumption, and a method for the production thereof.

Soya (Glycine Max Merrill) has been grown in China for 5000 years and the need to transform the fruits thereof, the seeds, into a pleasant and digestible food has produced many processing methods to adapt soya to the needs and tastes of the populations that have imported and grown soya throughout the world.

Two main varieties of soya are most widely grown, which give seeds with differently coloured skin: the more common yellow quality and the brown-black purple quality that is less common.

For all types, the colour of the decorticated seeds is generally yellowish.

The interest in soya seeds is mainly directed towards the high protein content (30% - 40% in weight of the whole seeds), mainly consisting of globulin (glycinin and beta-conglycinin) and albumin, containing ample quantities of all the essential amino acids, which, if suitably treated by cooking and/or fermentation, constitute a valid substitute for proteins of animal origin (milk, eggs, meat).

In addition to the protein component, the soya seeds also contain ample quantities of the other two fundamental components of the caloric and nutritional contributions to human diet: fats and carbohydrates.

The fat fraction constitutes 18-20% of the weight of the whole seeds and consists of a complex which is rich in essential polyunsaturated fatty acids that cannot be synthesised by the human body, which have to be assumed with diet, in which the following predominate: linoleic acid (50-60% in weight of the fatty substance), oleic acid (20-30%), linolenic acid (7-8%); with few saturated fats: palmitic acid (7-9%), stearic acid (3-4%), traces of arachic, myristic and lauric acid. Cholesterol is not present.

A fraction of the fats, which is much appreciated for the widely recognised health-giving properties for the circulatory and cerebral system, comprises lecithin and cephalin, which constitute 2-2.5% of the fatty matter in weight.

The total fraction of carbohydrates in the soya represents 30-35% in weight of the whole seeds, with 6-8% cellulose in the coating, whilst in the decorticated cotyledons we find 10-15% sugars (saccharose, raffinose, stachiose), hemicellulose, pectin and other partially soluble polysaccharides.

Ashes (4.5-5% in weight of the whole seeds) contain significant quantities of essential minerals such as potassium, phosphorus, calcium, magnesium and lesser quantities of iron, sodium, sulphur and zinc.

The contents of vital substances are completed by the vitamin component, which is represented by the complex B (B1, riboflavin, niacin, pantothenic acid), carotene, that is precursor of vitamin A, and vitamin E.

A component was discovered recently and much appreciated that consists of vegetable hormones: the isoflavones (genistein and daidzein) are particularly useful for female hormone support and cholesterol-lowering action.

The drink that is obtained from the seeds, which drink is improperly called "soya milk", is a milky emulsion that is very similar to animal milk and arises from the need to have a liquid product that is easily digestible and ready to use as an alternative to animal milk. This need has produced an offer of many types of drink, prevalently long-life, stored in "Tetra Pak" type containers.

Depending on countries and the preferences of consumers, different products are on offer, both with the basic taste and with various flavours with added ingredients. Thus whilst in the East, except for Japan, the typical taste of beans is appreciated, in the West this typical taste of soya is reduced and masked as much as possible because it limits more widespread consumption of the milk substitute.

As soya has a very consistent structure, different techniques are used that are intended to denature by breaking down as much as possible the protein structures, which conserve the unwelcome taste thereof, through high-temperature heat treatments, under pressure/vacuum, under greatly altered pH conditions, with acids (up to pH 2-3) and strongly alkaline bases (up to pH 10).

In order to eliminate the unpleasant smell, that is mainly formed by oxidation of the fatty fraction of the polyunsaturates, by endogenous enzymes (lipoxygenase) contained in the seeds, in addition to the thermal treatment, as a raw material defatted flour or concentrated proteins are used, then adding a quantity of refined and deodorised soya oil then purified lecithin to stabilise the emulsion.

In order to cause these soya drinks to resemble the cow milk also with respect to the flavour, it has become the standard to add also artificial flavours having a masking effect and/or identical to the flavours of milk.

The organoleptic result of drinks that have been so treated is generally satisfactory and also the productive yield is advantageously high, since by promoting treatment with acids and strong alkaline bases the non soluble soya pulp (okara) is reduced.

Such intense chemical and thermal treatments are harmful and counterproductive for maintaining the nutritional and supplement integrity of the high content of vital factors that nature has abundantly concentrated in the soya seeds.

US 6582739 discloses a method for effectively utilizing soybean curd lees, which are discharged in large quantity in the process to produce soybean-related food products, such as soybean curd (tofu) or soybean milk, known as food products containing vegetable proteins. According to the method, a soybean milk (functional soybean curd lees milk) and a soybean curd (functional soybean curd), both having good taste and high functions, can be produced without discharging waste product and with high economic feasibility.

EP 0287081 discloses a method for achieve a soya bean milk provided with a smooth, rich texture, in which the soya beans are metered into a prepared, heated, alkaline aqueous solution (preferred ratio by weight 1:4 to 10) and the heated material is immediately ground to give a slurry. After the fine comminution step, the resulting dispersion is heated indirectly 120°-150° C. The pressure is then released, the mixture is then degassed under slight subatmospheric pressure and rendered neutral using an edible acid, and soya bean milk and solids are separated via a separator.

GB 1314870 discloses a method, in which ground soya and a sugar, preferably maltose, are added to water. The mixture is heated to effect peptisation, the insoluble material is removed, the mixture is boiled to coagulate proteins, cooled, and homogenised with a stabiliser, for example glyceryl monostearate. A fat, for example palm kernel or ground nut oil, and a stabiliser, for example glyceryl monostearate and lecithin, are added to a portion of the homogenised mixture to form a cream and the cream is then homogenised with the remainder of the mixture to form a synthetic milk. The pH of the mixture of ground soya, sugar and water is adjusted before or after peptisation, for example by adding a mild alkali such as sodium or calcium carbonate, so that the produced milk has an acidity of about 0.005 (the acidity being the weight% of lactic acid present) and a pH of about 7.5.

US 2003/124223 discloses a process for producing a stabilized soy beverage from dehulled/whole soybeans partially hydrolyzed with enzymes. In a preferred embodiment, the process comprises: hydrating whole soybeans to activate the endogenous enzymes thereof; dehulling the soybeans; hydrolyzing the proteins in the dehulled soybean cotyledons, by incubating the cotyledons at elevated temperatures; gelatinizing the incubated cotyledons to induce coagulation of the soybean polysaccharides; milling the gelatinized cotyledons into a slurry; hydrolyzing the polysaccharides of the cotyledons with the aid of added cellulose and/or hemicellulase, to form a hydrolyzed soy base; deodorizing the slurry; mixing sweeteners, flavouring and stabilizers with the hydrolyzed soy base; homogenizing the hydrolyzed soy base; heat treating the hydrolyzed soy base to achieve a soy beverage.

JP 58126748 discloses a method, in which soybean grains are immersed in water for 10 hours, ground while adding hot water thereto, boiled for a short time, cooled, and pressed to obtain soya milk. The pH of the milk is adjusted to 7-8, by using sodium hydroxide or calcium hydroxide. After the pH-adjustment, the soya milk is passed through a column packed with a synthetic adsorption resin, which is a rigid, insoluble, porous, non-polar polymer having macro-network structure and obtained by the polymerization of styrene and divinylbenzene. The odorous components and the colouring components of the soya milk are removed by the resin treatment, and the obtained soya milk has a milk-like taste.

WO 2005/020714 discloses a process for preparing whole soybean milk or curd, comprising milling soybean and homogenizing the milled soybean by repeating at least two times a step of ultrahigh pressure micronization. The pressure applied at each ultrahigh pressure micronization step is more than 500 bar, the sum of the pressures applied during the repeated micronization step is more than 2000 bar. No solid residue, so called "okara", is produced during the process.

US 4064277 discloses a method for processing soybeans to extract soybean proteins, in which whole or hulled soybeans are contacted with water including a competitive inhibitor for beta-glycosidase, selected from the group consisting of aldonic lactones and Nojirimycin. In this way, the throat-catching sensation of the extracted soybean protein is reduced.

The task of the present invention is to devise a process for transforming whole soya seeds that are intact and are not devoid of any nutritionally valid component, by preserving as well as possible the vital and health-giving properties of the components thereof, respecting the principles of naturalness, wholeness, completeness and cheapness.

In the ambit of this task, an object of the invention is to make a soya-based drink and a production method in which the choice of natural methods for making the soya drink does not limit the productive possibilities but on the contrary simplifies the productive process and plants thereof, enriching the final result without resorting to unnatural forcing.

A further object is to make a drink and a method subject to the rules for biological-organic productions of the European Community in conformity to Regulation EEC 2092/91 and subsequent supplements and modifications, in particular with regard to the use of ingredients, auxiliary manufacturing substances, food additives, excipients and aromas, as provided in Annex VI to the Regulation.

This and other objects, which will be better highlighted below, are achieved by a soya drink obtained by a production method comprising the following steps:

Use of whole soya seeds, preferably from non genetically modified organic farming.

Decortication of the seeds, through the elimination of saponine and potentially toxic substances contained in the skin, without overheating of the external surfaces, which would cause oxidation and denaturing of the coating structures of the cotyledons.

No preliminary soaking, which may trigger fermentations and enzymatic transformations by means of endogenous enzymes (protease, lipoxygenase), causing unpleasant flavours and smells.

Immersion of the decorticated seeds in preheated water, preferably around 85°C for 10-15 minutes, in order to deactivate the endogenous enzymes contained in the seeds (protease, lipoxygenase).

Simultaneous cooking and grinding, until a fine dispersion is obtained, in order to cook in an appropriate manner all the dispersed particulate, up to a temperature of 100°C.

Adjustment to the pH of the water-soya mixture with sodium and/or calcium carbonate, also of marine origin from fossil coral algae (lithothamnium calcareum) in a non-acid physiological interval around pH 7-8.

Complete enzymatic hydrolysis treatment of all the hydrolysable and available nutritional components in the seeds, so as to transfer to the milky emulsion all the substances that are digestible, with a mixture of enzymes comprising: protease, carbohydrase, cellulase, xylanase, pectinase and, as an option, alpha-galactosidase (for a version with better tolerance of sugars, which are not easily digestible by a large portion of the population).

The temperature and the type of enzymatic transformation depends on the type and concentration of the enzymes that are used, but which it is preferred to obtain in a short time, around 30-60 minutes and at a relatively low temperature, comprised between 40-60°C.

Centrifugal filtration for eliminating from the obtained suspension the non-hydrolysed particulate that is indigestible and does not take part to the formation of a stable emulsion, thus sedimenting with deposits on the bottom of the containers.

Possible addition of other ingredients to improve the nutritional properties thereof, the organoleptic features thereof (sweetness, taste, smell, colour), with natural non synthetic ingredients, to enrich the contents, the appearance, the scent and the taste thereof, such as, for example:

Mineral supplements: marine algae, calcium carbonate/calcium citrate, magnesium carbonate or marine magnesium, essential olygoelements, etc.

Vitamin, prebiotic, probiotic, energy supplements: Vit.C, Vit.A, Vit.E, folic acid, Omega 3 (fatty acids), phytosterols, beta-glucans, fructo-oligosaccharides(FOS), isoflavones, ginseng, green tea, lecithin, amino acids, lactic ferments, etc.

Sweeteners, tastes and aromas: cane sugar, fructose, grape sugar, apple concentrate, agave and maple syrups, fruit juices and purees, cocoa, coffee, almond and hazelnut creams, coconut, natural flavours, salt, etc.

Stabilisers, thickeners and structuring means; lecithin, agar-agar, carrageenan, arabic gum /xanthan, guar seed flour, carob seed flour, sodium/potassium alginates, starches, pectins, etc.

Homogenisation to structure the emulsion and make the emulsion stable over time, in order to avoid deposits of non soluble substances having a weight and molecular structure tending to sedimentation.

Final pasteurisation and/or UHT sterilisation thermal treatment, in function of the chosen directed to market fresh products, or long-life products, which are marketed at ambient temperature;

Final packaging in various sizes and types of containers that may be made of glass, plastics, paper/aluminium/plastics composites (such as Tetra Pak, Combibloc), in function of the choice of market and the features of the packaged drink.

The process disclosed above provides a soya-based drink with the following particular features:

Whole and complete: with all the nutritionally valid components that are not rejected, not denatured or oxidised and transferred to the drink, with a rapid process, under physiological pH conditions and gentle, non destructive thermal treatment of the protein structures, of the fats and of the lecithin, of the sugars, of the vitamins and of the other health-giving constituents contained in the soya.

The drink contains all the components of the soya that have nutritional properties, for the hydrolysis with a properly composed and studied enzyme mixture for the complete treatment of the hydrolysable and digestible fractions contained in the seeds, focussed on the structures of the proteins, with the proteases and on the complex of the carbon hydrates with carbohydrases, cellulases, xylanases, pectinases and alpha-galactosidases.

Digestible hypoallergenic: the result of the enzymatic action of the proteases is the production of protein chains (peptides) that are lighter than the starting complex structures, as occurs in the digestive process, lightening the burden thereof and losing a large part of the features sensitising the immune system, with a reduction of immunoreactivity to the whole protein structures and lectin of the soya.

Further, the possible use of the alpha-galactosidase enzyme, which is able to separate the galactans (oligosaccharides found in significant quantities in soya), makes the drink easier to tolerate and digest for persons with reduced enzyme potential who have intestinal disturbances caused by these sugars that are not easy to digest (such as lactose of animal milk).

The total gentle and continuous thermal treatment, which is greater than 1700 Jxg and is provided in the production process ensures the net reduction of up to 95% of the antinutritional factors contained in the crude soya (urease enzyme, trypsin, chymotrypsin, lipoxygenase, lectins), and the stabilisation of the oxidative potential of fats (according to the studies of the American Soybean Association).

Dietetic: as a result of the increase, up to the double of the normal soluble fibre content in the drink, which is obtained through the hydrolysis over a wide range of the fibrous coating structures of the cotyledons and those structures intimately linked to the protein chains with the enzyme compound focussed on the carbon hydrates.

A greater fibre content in the drink has a recognised dietetic value by lowering the glycaemic index of drinks with added sweeteners and through the contribution to regularising intestinal transit.

Pleasant: through the provided inactivation process for inactivating the oxidizing enzymes, hot grinding, cooking at a suitable temperature and for a suitable time and complete enzyme hydrolysis, we obtain a drastic reduction, up to completely eliminating the taste and characteristic smell of bean in the drink.

Cheap: the provided process is simpler and faster than standard soya drinks producing systems, since the process is made with fewer passages (without soaking, by deactivating, simultaneous cooking and grinding, in the same tank, without transfers), in a total process time comprised between 50-90 minutes and with a simplified system compared with the known systems.

By not using acids and strongly alkaline bases, as in standard practice, producing the drink is also safer for the operators, has a lesser environmental impact, with no using and discharging into the environment residues of non-ecological chemical substances that require specific treatment for disposal.

Some examples of the productive process and obtained products are listed below.

### Example 1

To a cooking tank with stirrer, provided with a grinding turbine, 100-200g of soya seeds are added for a litre of H₂O preheated to 80-90°C, which soya seeds have preferably just been decorticated or are whole soya seeds;
endogenous enzymes are inactivated by waiting for 10-15 min, in constant agitation;
the mass is ground finely, heated slowly and cooked for 10-20 min up to 95-100°C;
the pH of the mass is adjusted, in function of the acidity supplied by the soya, to values comprised between pH 7-8, with the addition of calcium carbonate (or alga lithothamnium calcareum) and/or sodium bicarbonate;
the mass is cooled rapidly to around 40-60°C (in function of the type of selected enzymes), adding a mixture of enzymes formed by: protease, carbohydrase, cellulase, xylanase, pectinase;
the mass is digested with the mixture of enzymes under constant agitation for a time that is variable around 30-60 min. in function of the dosage and the type of enzymes used;
the digested mass is filtered with a centrifugal separator to eliminate non-hydrolysed and non suspendible particles;
it is homogenised with a piston homogeniser, as for animal milk;
it is pasteurised and/or sterilised preferably with a UHT system;
it is packaged in the chosen package (Tetra Pak "brik" container).

The drink, which is obtained according to the disclosed process, can have the following nutritional content, in function of the soya/added water ratio, of the type of soya selected and of the dose of used enzymes:

| | | | |
|---|---|---|---|
| Energy (Kcal) | 25 | 37 | 50 |
| Proteins | 2 | 3 | 4 |
| Carbohydrates/sugars | 1 | 1.75 | 2.5 |
| Fats | 1.5 | 2.15 | 2.8 |
| Fibres | 0.5 | 1 | 1.5 |
| Ashes/minerals | 0.4 | 0.7 | 1 |

A soya drink having a nutritional content according to the minimum values shown above is definable as "light", whilst with average values it represents the standard type and with maximum and higher values it is definable as nourishing, it is usable for a particular nutritional support, or as a base for successive concentrations and possible drying.

### Example 2

According to the process of the Example 1, but adding a greater quantity of protease enzyme plus alpha-galactosidase enzyme, peptides with a lower molecular weight and digestion of galactan sugars in simple sugars are obtained.

A drink obtained through a more pronounced protein hydrolysis, the decomposition of the oligosaccharides into simple sugars and the presence of hydrolysed fibres, may be considered to be hypoallergenic at high tolerance, because the sensitising factors (whole proteins and soya lectins) and those indigestible ones that cause intestinal flatulence (bean fibres and galactans) have been greatly reduced or eliminated.

The soya drink produced according to the present method is suitable, like animal milk, for making various food products such as puddings and desserts, yoghurts, ice creams, creams for cooking, fruit drinks, etc.

Further, through enrichment with vitamin, mineral, energy, prebiotic and probiotic supplements (phytoestrogens, mono-polyunsaturated fatty acids, phytosterols, dietetic fibres, lecithins, amino acids, lactic ferments, etc.), drinks and health-giving preparations are made with indications that are useful for health and welfare.

If it is concentrated and/or dried in powder as such or mixed with other ingredients (cocoa, sugars, aromas, dried fruit, soluble coffee, etc) it can be used as an instant mixture to be reconstituted, with water or another liquid at the moment of use.

It has been found that the invention achieves the preset task and objects.

A soya drink has in fact been made that is obtained with a production method in accordance with the principles of naturalness and wholeness and in conformity to the prescriptions of the EEC Regulation governing organic productions, that have used these principles to make an extended and harmonised regulation for all countries of the European Union.

## Claims

1. Complete whole soya natural drink, for human consumption, **characterised in that** it is obtained by means of a process comprising the steps of:
deactivating endogenous enzymes contained in raw soya seeds, by immersing the decorticated or whole seeds in preheated water, preferably around 80-100°C for 10-15 minutes;
contemporaneously cooking and grinding, up to obtain a fine dispersion, at a temperature up to approximately 100°C;
adjusting the pH of the water-soya mixture with sodium and/or calcium carbonates, also of marine origin from algae of the type of lithothamnium calcareum, in a physiological interval comprised between pH 7-8;
treating by complete enzymatic hydrolysis the nutritional components which are hydrolysable and available in the seeds, with an enzyme mixture comprising protease, carbohydrase, cellulase, xylanase, pectinase and, optionally, alphagalactosidase;
performing a centrifugal filtration step for eliminating non-hydrolysed particulate that is not suspendible or emulsifiable.

2. Complete whole soya natural drink, according to claim 1, **characterised in that** it is obtained from complete whole soya seeds, according to the prescriptions of Regulation EEC 2092/91 and subsequent supplements and modifications, regarding biological-organic productions.

3. Complete whole soya natural drink, according to claim 1 or 2, **characterised in that** it is obtained by using whole soya seeds, preferably from organic farming and non genetically modified.

4. Complete whole soya natural drink, according to any preceding claim, **characterised in that** the process comprises an initial optional decortication of the seeds.

5. Complete whole soya natural drink, according to any preceding claim, **characterised in that** the process does not provide any preliminary soaking of the seeds.

6. Complete whole soya natural drink, according to any preceding claim, **characterised in that** the process comprises possible adding of other ingredients and supplements for improving the nutritional properties thereof, the organoleptic features thereof (sweetness, taste, smell, colour), with natural non synthetic ingredients, to enrich the contents, the appearance, the scent and the taste thereof.

7. Complete whole soya natural drink, according to any preceding claim, **characterised in that** the standard process comprises the steps of:
homogenising, in order to make emulsion stable over time;
final pasteurisation and/or UHT sterilisation heat treatment, with final packaging in various sizes and types of container.

8. Complete whole soya natural drink, according to any preceding claim, **characterised in that** it has different appearances and compositions:
light;
standard;
nourishing;
integrated;
concentrated and powdered;
transformed into various foods: desserts, yoghurts, ice creams, creams for cooking, etc.

9. Process for producing a complete whole soya natural drink, for human consumption, **characterised in that** it comprises the steps of:
deactivating endogenous enzymes contained in raw soya seeds,
by immersing the decorticated or whole seeds, in preheated water, preferably around 80-100°C for 10-15 minutes;
simultaneously cooking and grinding, until a fine dispersion is obtained, at a temperature up to approximately 100°C;
adjusting the pH of the water-soya mixture with sodium and/or calcium carbonates, also of marine origin from algae of the type of lithothamnium calcareum, in a physiological interval comprised between pH 7-8;
treating by complete enzymatic hydrolysis the nutritional components which are hydrolysable and available in the seeds, with an enzyme mixture comprising protease, carbohydrase, cellulase, xylanase, pectinase and, optionally, alphagalactosidase;
performing a centrifugal filtration step for eliminating non-hydrolysed particulate that is not suspendible or emulsifiable.

10. Process, according to claim 9, **characterised in that** it uses complete whole soya seeds, according to the prescriptions of Regulation EEC 2092/91 and subsequent supplements and modifications, regarding biological-organic products.

11. Process, according claim 9 or 10, **characterised in that** it uses whole soya seeds, preferably from organic farming and not genetically modified.

12. Process, according to any one of claims 9 to 11, **characterised in that** it comprises initial optional decortication of the seeds.

13. Process, according to any one of claims 9 to 12, **characterised in that** it does not provide any preliminary soaking of the seeds.

14. Process, according to any one of claims 9 to 13, **characterised in that** it comprises possible adding of other ingredients and supplements for improving the nutritional properties thereof, the organoleptic features thereof (sweetness, taste, smell, colour), with natural non synthetic ingredients, to enrich the contents, the appearance, the scent and the taste thereof.

15. Process, according to any one of claims 9 to 14, **characterised in that** it comprises the steps of:
homogenising for making emulsion stable over time;
final pasteurisation and/or UHT sterilisation heat treatment, with final packaging in various sizes and types of container.

## Patentansprüche

1. Vollwertiges ökologisches Sojanaturgetränk, zum menschlichen Verzehr, **dadurch gekennzeichnet, dass** es mittels eines Verfahrens mit den folgenden Schritten erhalten wird:
Deaktivieren von endogenen Enzymen, die in rohen Sojakeimen enthalten sind, indem die geschälten oder ganzen Keimlinge in vorerwärmtes Wasser getaucht werden, vorzugsweise bei etwa 80 bis 100 °C für 10 bis 15 Minuten;
gleichzeitig Kochen und Zerkleinern, bis man eine feine Dispersion erhält, bei einer Temperatur bis etwa 100 °C;
Einstellen des pH der Wasser-Soja-Mischung mit Natrium- und/oder Calciumcarbonaten, auch aus Meeresherkunft von Algen der Art lithothamnium calcareum, in ein physiologisches Intervall zwischen pH 7 - 8;
Behandeln der Ernährungskomponenten, die hydrolysierbar und verfügbar in den Keimen sind, durch vollständige enzymatische Hydrolyse, mit einer Enzymmischung, die Protease, Carbohydrase, Cellulase, Xylanase, Pectinase und, optional, Alphagalactosidase aufweist;
Durchführen eines Zentrifugalfilterschritts zum Eliminieren von nicht hydrolysierten Partikeln, die nicht suspendierbar oder emulgierbar sind.

2. Vollwertiges ökologisches Sojanaturgetränk nach Anspruch 1, **dadurch gekennzeichnet, dass** es aus vollwertigen ökologischen Sojakeimlingen erhalten wird, gemäß der EU-Verordnung Nr. 2092/91 und nachfolgenden Ergänzungen und Änderungen betreffend biologisch-organische Herstellungen.

3. Vollwertiges ökologisches Sojanaturgetränk nach Anspruch 1 oder 2, **dadurch gekennzeichnet, dass** es durch Verwendung von ganzen Sojakeimen erhalten wird, vorzugsweise aus ökologischer Landwirtschaft und nicht genetisch modifiziert.

4. Vollwertiges ökologisches Sojanaturgetränk nach einem der voranstehenden Ansprüche, **dadurch gekennzeichnet, dass** das Verfahren anfangs optional eine Entrindung bzw. Enthäutung der Keime aufweist.

5. Vollwertiges ökologisches Sojanaturgetränk nach einem der voranstehenden Ansprüche, **dadurch gekennzeichnet, dass** das Verfahren kein vorausgehendes Quellen der Keime vorsieht.

6. Vollwertiges ökologisches Sojanaturgetränk nach einem der voranstehenden Ansprüche, **dadurch gekennzeichnet, dass** das Verfahren das mögliche Hinzufügen von anderen Zutaten und Ergänzungen zum Verbessern der Ernährungseigenschaften davon, der organoleptischen Merkmale davon (Süße, Geschmack, Duft, Farbe) aufweist, mit natürlichen, nicht synthetischen Zutaten, um den Inhalt, die Erscheinung, den Duft und den Geschmack davon anzureichern.

7. Vollwertiges ökologisches Sojanaturgetränk nach einem der voranstehenden Ansprüche, **dadurch gekennzeichnet, dass** der Standardprozess die folgenden Schritte aufweist:
Homogenisieren, um die Emulsion über die Zeit stabil zu machen;
finales Pasteurisieren und/oder Sterilisations-Ultrahocherhitzen, mit einem letztendlichen Verpacken in verschiedene Größen und Arten von Behältern.

8. Vollwertiges ökologisches Sojanaturgetränk nach einem der voranstehenden Ansprüche, **dadurch gekennzeichnet, dass** es verschiedene Erscheinungen und Zusammensetzungen aufweist:
leicht;
Standard;
nahrhaft;
ganzheitlich;
konzentriert und pulverisiert;
transformiert in verschiedene Nahrungsmittel: Desserts, Joghurts, Eiscremes, Cremes zum Kochen, usw.

9. Verfahren zum Herstellen eines vollwertigen ökologischen Sojanaturgetränks, zum menschlichen Verzehr, **dadurch gekennzeichnet, dass** es die folgenden Schritte aufweist:
Deaktivieren von endogenen Enzymen, die in rohen Sojakeimen enthalten sind, indem die geschälten oder ganzen Keimlinge in vorerwärmtes Wasser getaucht werden, vorzugsweise bei etwa 80 bis 100 °C für 10 bis 15 Minuten;
simultan Kochen und Zerkleinern, bis man eine feine Dispersion erhält, bei einer Temperatur bis etwa 100 °C;
Einstellen des pH der Wasser-Soja-Mischung mit Natrium- und/oder Calciumcarbonaten, auch aus Meeresherkunft von Algen der Art lithothamnium calcareum, in ein physiologisches Intervall zwischen pH 7 - 8;
Behandeln der Ernährungskomponenten, die hydrolysierbar und verfügbar in den Keimen sind, durch vollständige enzymatische Hydrolyse, mit einer Enzymmischung, die Protease, Carbohydrase, Cellulase, Xylanase, Pectinase und, optional, Alphagalactosidase aufweist;
Durchführen eines Zentrifugalfilterschritts zum Eliminieren von nicht hydrolysierten Partikeln, die nicht suspendierbar oder emulgierbar sind.

10. Verfahren nach Anspruch 9, **dadurch gekennzeichnet, dass** es vollwertige ökologische Sojakeime nach den Vorschriften der EU-Verordnung Nr. 2092/91 und nachfolgende Ergänzungen und Änderungen betreffend biologisch-organische Erzeugnisse verwendet.

11. Verfahren nach Anspruch 9 oder 10, **dadurch gekennzeichnet, dass** es ganze Sojakeime verwendet, vorzugsweise aus ökologischer Landwirtschaft und nicht genetisch modifiziert.

12. Verfahren nach einem der Ansprüche 9 bis 11, **dadurch gekennzeichnet, dass** es anfangs optional ein Entrinden bzw. Enthäuten der Keime aufweist.

13. Verfahren nach einem der Ansprüche 9 bis 12, **dadurch gekennzeichnet, dass** es kein anfängliches Quellen der Keime vorsieht.

14. Verfahren nach einem der Ansprüche 9 bis 13, **dadurch gekennzeichnet, dass** es das mögliche Hinzufügen von anderen Zutaten und Ergänzungen zum Verbessern der Ernährungseigenschaften davon, der organoleptischen Merkmale davon (Süße, Geschmack, Duft, Farbe) aufweist, mit natürlichen, nicht synthetischen Zutaten, um die Inhalte, die Erscheinung, den Duft und den Geschmack davon anzureichern.

15. Verfahren nach einem der Ansprüche 9 bis 14, **dadurch gekennzeichnet, dass** es die folgenden Schritte aufweist:
Homogenisieren, um die Emulsion über die Zeit stabil zu machen;
finales Pasteurisieren und/oder Sterilisations-Ultrahocherhitzen, mit einem letztendlichen Verpacken in verschiedene Größen und Arten von Behältern.

## Revendications

1. Boisson naturelle au soja entier et complet, destinée à la consommation humaine, *caractérisée en ce qu*'elle est obtenue au moyen d'un procédé comprenant les étapes de :
désactivation d'enzymes endogènes contenues dans les graines de soja brutes, par immersion des graines décortiquées ou entières dans de l'eau préchauffée, préférablement autour de 80 à 100°C, pendant 10 à 15 minutes ;
cuisson et broyage simultanés, jusqu'à obtenir une dispersion fine, à une température allant jusqu'à environ 100°C ;
ajustement du pH du mélange eau-soja avec du carbonate de sodium et/ou du carbonate de calcium, qui peuvent être d'origine marine provenant d'algues du type lithothamnium calcareum, dans une plage physiologique de pH comprise entre 7 et 8 ;
traitement par hydrolyse enzymatique complète des composants nutritionnels qui sont hydrolysables et disponibles dans les graines, avec un mélange d'enzymes comprenant des protéases, carbohydrases, cellulases, xylanases, pectinases et, facultativement, de l'alphagalactosidase ;
réalisation d'une étape de filtration par centrifugation pour éliminer les particules non hydrolysées qui ne peuvent être mises en suspension ou ne sont pas émulsionnables.

2. Boisson naturelle au soja entier et complet, selon la revendication 1, *caractérisée en ce qu*'elle est obtenue à partir de graines de soja entières et complètes, selon le Règlement CEE 2092/91 et les suppléments et modifications ultérieurs de celui-ci, concernant les productions biologiques.

3. Boisson naturelle au soja entier et complet, selon la revendication 1 ou 2, *caractérisée en ce qu*'elle est obtenue en utilisant des graines de soja entières, de manière préférée provenant de l'agriculture biologique et non modifiées génétiquement.

4. Boisson naturelle au soja entier et complet, selon l'une quelconque des revendications précédentes, ***caractérisée en ce que*** le procédé comprend un décorticage initial facultatif des graines.

5. Boisson naturelle au soja entier et complet, selon l'une quelconque des revendications précédentes, ***caractérisée en ce que*** le procédé ne prévoit pas de trempage préliminaire des graines.

6. Boisson naturelle au soja entier et complet, selon l'une quelconque des revendications précédentes, ***caractérisée en ce que*** le procédé comprend l'ajout éventuel d'autres ingrédients et suppléments pour améliorer ses propriétés nutritionnelles, ses caractéristiques organoleptiques (douceur, goût, odeur, couleur), avec des ingrédients naturels non synthétiques, pour en améliorer le contenu, l'apparence, l'odeur et le goût.

7. Boisson naturelle au soja entier et complet, selon l'une quelconque des revendications précédentes, ***caractérisée en ce que*** le procédé standard comprend les étapes de :
homogénéisation dans le but de stabiliser l'émulsion dans le temps ;
pasteurisation finale et/ou traitement thermique final de stérilisation UHT, avec conditionnement final dans différents types et tailles de récipients.

8. Boisson naturelle au soja entier et complet, selon l'une quelconque des revendications précédentes, ***caractérisée en ce qu'**elle* se présente sous différentes apparences et compositions :
allégée ;
standard ;
nourrissante ;
intégrée ;
concentrée et en poudre ;
transformée en aliments divers : desserts, yaourts, glaces, crèmes à cuire, etc.

9. Procédé de fabrication d'une boisson naturelle au soja entier et complet, destinée à la consommation humaine, ***caractérisé en ce qu'**il* comprend les étapes de :
désactivation d'enzymes endogènes contenues dans les graines de soja brutes, par immersion des graines décortiquées ou entières dans de l'eau préchauffée, préférablement autour de 80 à 100°C, pendant 10 à 15 minutes ;
cuisson et broyage simultanés, jusqu'à obtenir une dispersion fine, à une température allant jusqu'à environ 100°C ;
ajustement du pH du mélange eau-soja avec du carbonate de sodium et/ou du carbonate de calcium, qui peuvent être d'origine marine provenant d'algues du type lithothamnium calcareum, dans une plage physiologique de pH comprise entre 7 et 8 ;
traitement par hydrolyse enzymatique complète des composants nutritionnels qui sont hydrolysables et disponibles dans les graines, avec un mélange d'enzymes comprenant des protéases, carbohydrases, cellulases, xylanases, pectinases et, facultativement, de l'alphagalactosidase ;
réalisation d'une étape de filtration par centrifugation pour éliminer les particules non hydrolysées qui ne peuvent être mises en suspension ou ne sont pas émulsionnables.

10. Procédé selon la revendication 9, *caractérisé en ce qu*'il utilise des graines de soja entières et complètes, selon le Règlement CEE 2092/91 et les suppléments et modifications ultérieurs de celui-ci, concernant les productions biologiques.

11. Procédé selon la revendication 9 ou 10, *caractérisé en ce qu*'il utilise des graines de soja entières, de manière préférée provenant de l'agriculture biologique et non modifiées génétiquement.

12. Procédé selon l'une quelconque des revendications 9 à 11, *caractérisé en ce qu*'il comprend un décorticage initial facultatif des graines.

13. Procédé selon l'une quelconque des revendications 9 à 12, *caractérisé en ce qu*'il ne prévoit pas de trempage préliminaire des graines.

14. Procédé selon l'une quelconque des revendications 9 à 13, *caractérisé en ce qu*'il comprend un ajout éventuel d'autres ingrédients et suppléments pour améliorer ses propriétés nutritionnelles, ses caractéristiques organoleptiques (douceur, goût, odeur, couleur), avec des ingrédients naturels non synthétiques, pour en améliorer le contenu, l'apparence, l'odeur et le goût.

15. Procédé selon l'une quelconque des revendications 9 à 14, *caractérisé en ce qu*'il comprend les étapes de :
homogénéisation dans le but de stabiliser l'émulsion dans le temps ;
pasteurisation finale et/ou traitement thermique final de stérilisation UHT, avec conditionnement final dans différents types et tailles de récipients.
